**Europäisches Patentamt**

**European Patent Office**

**Office européen des brevets**

(19)

(11) Veröffentlichungsnummer: **0 054 947 B1**

(12)

# EUROPÄISCHE PATENTSCHRIFT

(45) Veröffentlichungstag der Patentschrift:
27.03.85

(21) Anmeldenummer: 81110621.0

(22) Anmeldetag: 19.12.81

(51) Int. Cl.⁴: **B 60 N 1/00**

(54) Vibrationsgedämpfte Sitzlagerung.

(30) Priorität: 24.12.80 US 219900

(43) Veröffentlichungstag der Anmeldung:
30.06.82 Patentblatt 82/26

(45) Bekanntmachung des Hinweises auf die Patenterteilung:
27.03.85 Patentblatt 85/13

(84) Benannte Vertragsstaaten:
AT DE FR GB IT SE

(56) Entgegenhaltungen:
EP - A - 0 019 399
US - A - 3 134 568
US - A - 3 860 283
US - A - 4 228 984

(73) Patentinhaber: DEERE & COMPANY, 1 John Deere Road, Moline Illinois 61265 (US)

(72) Erfinder: Thompson, James Edward, 2022 Lilac Lane, Cedar Falls Iowa 50613 (US)
Erfinder: Sandvik, Leonard Elmer, 1106 West 3rd, Cedar Falls Iowa 50613 (US)
Erfinder: Elliott, Marc Alan, 500 Leroy, Muscatine Iowa 52761 (US)

(74) Vertreter: Gramm, Werner, Prof. Dipl.-Ing. et al, Patentanwälte Gramm + Lins Theodor-Heuss-Strasse 2, D-3300 Braunschweig (DE)

## Beschreibung

Die Erfindung betrifft eine vibrationsgedämpfte Sitzlagerung mit einer Sitzaufnahme, die gegenüber einem Bodenteil innerhalb einer Horizontalebene in jeder Richtung relativ begrenzt gedämpft verschiebbar und dem Bodenteil gegenüber in einer Zentrierstellung federelastisch gehalten ist.

Derartige Sitzlagerungen werden insbesondere in Schleppersitze, oder in Sitze anderer Querfeldein-Fahrzeuge eingebaut, die hohen Frequenzen und anderen Bewegungen unterliegen, die sich aus der Art des Fahrzeugs selbst sowie aus den Unebenheiten des Geländes ergeben. Bekannt ist eine Dämpfung des Fahrersitzes in vertikaler Richtung durch eine Horizontaldämpfung zu ergänzen.

Die eingangs erläuterte Sitzlagerung läßt sich aus der US-Patentschrift 3 134 568 entnehmen. Hier ist in einem scheibenförmig ausgebildeten Bodenteil zentrisch eine lotrecht nach oben ragende Buchse befestigt, die durch eine Bohrung erheblich größeren Durchmessers der ebenfalls scheibenförmig ausgebildeten Sitzaufnahme hindurchragt. Letztere stützt sich auf dem Bodenteil über Kugeln ab, die in einem zwischen Bodenteil und Sitzaufnahme angeordneten Käfig gelagert sind. Federn greifen so an den verschiedenen Teilen an, daß in Ruhestellung die Sitzaufnahme immer dieselbe Ausgangsposition gegenüber dem Bodenteil einnimmt. Die horizontale Verschiebbarkeit der Sitzaufnahme gegenüber dem Bodenteil wird begrenzt durch den jeweiligen lichten Abstand zwischen dem Außenmantel der genannten Buchse und der Innenwandung der genannten Bohrung innerhalb der Sitzaufnahme. Letztere kann somit gegenüber dem Bodenteil innerhalb der durch die Lage der Sitzaufnahme bestimmten Horizontalebene in jeder Richtung verschoben werden. Es ist aber auch eine begrenzte Rotation der Sitzaufnahme gegenüber dem Bodenteil möglich.

Da bei dieser Konstruktion die Sitzaufnahme innerhalb ihres Bewegungsspielraumes nicht geführt ist, ergibt sich im Betrieb ein schwammiges Sitzgefühl, zumal sich einer ungeführten Horizontalverschiebung auch noch eine Rotationsbewegung überlagern kann.

Eine weitere Ausführungsform für eine gedämpfte Sitzlagerung läßt sich der US-Patentschrift 4 228 984 entnehmen. Hier besteht die Sitzaufnahme aus zwei Rahmenteilen, die durch zwei parallel und im Abstand zueinander liegende Stangen miteinander verbunden sind. An dem einen der beiden Rahmenteile ist die Kolbenstange eines Stoßdämpfers angelenkt, an dem entgegengesetzt gerichtete Zugfedern angreifen, die mit ihrem anderen Ende an jeweils einem der beiden Rahmenteile angreifen. Das Bodenteil besteht ebenfalls aus zwei Rahmenteilen, die über eine Schiene miteinander verbunden sind, in die ein mit dem genannten Stoßdämpfer verbundener Zapfen formschlüssig eingreift. In den beiden Rahmenteilen des Bodenteils sind insgesamt vier Lager angeordnet, von denen jeweils zwei miteinander fluchten und zur gleitenden Aufnahme der vorstehend genannten Stangen des Sitzträgers dienen. Die Zentrierung des Sitzträgers gegenüber dem Bodenteil erfolgt durch die beiden an dem Stoßdämpfer angreifenden Zugfedern, während der parallel zur Verschiebungsachse liegende Stoßdämpfer die begrenzten Verschiebungsbewegungen des Sitzträgers gegenüber dem Bodenteil dämpft.

Ein Nachteil dieser vorbekannten Sitzlagerung ist darin zu sehen, daß sie nur eine in Längsrichtung liegende Verschiebungsachse aufweist, obwohl die in der Praxis auftretenden Vibrationen und sonstigen Bewegungen innerhalb einer Horizontalebene nahezu alle Richtungen aufweisen können, auch wenn es eine Hauptbewegungsrichtung in Längsrichtung gibt.

Der Erfindung liegt somit die Aufgabe zugrunde, die eingangs erläuterte Sitzlagerung hinsichtlich ihres Sitzkomforts zu verbessern.

Diese Aufgabe wird erfindungsgemäß dadurch gelöst, daß zwischen Bodenteil und Sitzaufnahme ein Zwischenteil vorgesehen ist, das gegenüber dem Bodenteil in nur einer Richtung relativ begrenzt verschiebbar ist, während die Sitzaufnahme gegenüber dem Zwischenteil nur in einer zweiten Richtung relativ begrenzt verschiebbar ist, wobei die beiden Verschiebungsachsen senkrecht aufeinander stehen.

Ein spezielles Ausführungsbeispiel ist durch folgende Merkmale gekennzeichnet:

a) Es weisen das Bodenteil eine Bodenplatte, das Zwischenteil eine Lagerplatine und die Sitzaufnahme eine untere Lagerplatte sowie eine Sitzmontageplatte auf;

b) in der Lagerplatine sind mehrere Lager angeordnet, die auf der Bodenplatte aufliegen und gegen die untere Lagerplatte anliegen;

c) die Lagerplatine ist gegenüber der Bodenplatte entlang der ersten Verschiebungsachse verschiebbar;

d) die untere Lagerplatte ist gegenüber der Lagerplatine entlang der zweiten Verschiebungsachse verschiebbar;

e) die Sitzmontageplatte ist oberhalb der unteren Lagerplatte und dieser gegenüber drehbar angeordnet.

Zur Ermöglichung der Relativverschiebung zwischen Bodenplatte, Lagerplatine und unterer Lagerplatte können folgende Merkmale vorgesehen werden:

a) Zur Verschiebung der Lagerplatine gegenüber der Bodenplatte sind in der Lagerplatine erste Längsschlitze vorgesehen, in die erste Rollen eingreifen, die an der Bodenplatte montiert sind;

b) zur Verschiebung der unteren Lagerplatte gegenüber der Lagerplatine sind in letzterer zweite Längsschlitze vorgesehen, in die zweite Rollen eingreifen, die an der unteren Lagerplatte montiert sind.

Zwischen der Sitzmontageplatte und der unteren Lagerplatte kann eine Dreheinrichtung für den Sitz vorgesehen sein, die folgende Merkmale aufweist:

a) Zwischen der unteren Lagerplatte und der Sitzmontageplatte ist eine Drehscheibe angeordnet;

b) auf der Sitzmontageplatte ist eine untere Lagerscheibe angeordnet;

c) auf der unteren Lagerscheibe ist ein Lagerkäfig angeordnet, der mehrere Lager aufweist, die sich auf der unteren Lagerscheibe abstützen;

d) eine obere Lagerscheibe liegt auf den Lagern auf;

e) auf der unteren Lagerplatte ist in einer mittigen Bohrung eine Lagerhülse befestigt, die durch mittige Bohrungen in der Drehscheibe, der Sitzmontageplatte und der unteren Lagerscheibe ragt.

Diese Dreheinrichtung läßt sich vorzugsweise durch eine Sitz-Drehverriegelung manuell blokkieren.

Die Dämpfungs- und Zentriereinrichtung ist vorzugsweise dadurch gekennzeichnet, daß auf der Bodenplatte ein sich lotrecht nach oben erstreckender Stehbolzen montiert ist, an dem mehrere an verschiedenen Abschnitten der Sitzmontageplatte angehängte Federn sowie mehrere Stoßdämpfer angreifen, die sich an verschiedenen Abschnitten der Sitzmontageplatte abstützen. Dabei ist es vorteilhaft, wenn auf dem Stehbolzen ein Speicherstern montiert ist, an dem drei im gleichen Abstand um den Stehbolzen angeordnete Federn mit ihrem jeweils einen Ende sowie das eine Ende eines Stoßdämpfers angreifen, während ein zweiter Stoßdämpfer, der rechtwinklig zum ersten Stoßdämpfer liegt, mit seinem einen Ende unmittelbar am Stehbolzen angreift.

Auch hier ist es vorteilhaft, wenn für die Dämpfungs- und Zentriereinrichtung eine Dämpfungsverriegelung vorgesehen ist, durch die die untere Lagerplatte mit der Lagerplatine und der Bodenplatte gekuppelt werden können, so daß zwischen diesen drei Bauteilen eine Relativbewegung verhindert wird.

Ferner ist es vorteilhaft, wenn für die gesamte Sitzlagerung eine Verschiebeeinrichtung vorgesehen ist, auf der sich die Sitzlagerung und damit der Sitz in Längsrichtung, also in bzw. gegen Fahrtrichtung verschieben und in der gewünschten Position verriegeln läßt. Diese Verriegelung erfolgt über einen manuell zu bedienenden Längsverschiebungs-Verriegelungshebel.

Weitere Merkmale der vorstehend erläuterten speziellen Ausführungsform sind Gegenstand der Unteransprüche.

Eine Alternativlösung kann dadurch gekennzeichnet sein, daß im Zwischenteil eine erste, sich auf dem Bodenteil abstützende Rollengruppe mit parallelen ersten Achsen sowie eine zweite, gegen die Sitzaufnahme anliegende Rollengruppe angeordnet sind, deren parallele zweiten Achsen senkrecht zu den ersten Achsen liegen. Diese Ausführungsform ist dabei durch folgende Dämpfungs- und Zentrierelemente gekennzeichnet:

a) Ein erster Stoßdämpfer ist zwischen Zwischenteil und Bodenteil geschaltet und liegt parallel zu den zweiten Achsen;

b) ein erstes Federpaar ist zwischen einem gemeinsamen Widerlager des Bodenteils und sich gegenüberliegenden Abschnitten des Zwischenteils eingehängt und liegt parallel zu den zweiten Achsen;

c) ein zweiter Stoßdämpfer ist zwischen Zwischenteil und Sitzaufnahme geschaltet und liegt parallel zu den ersten Achsen;

d) ein zweites Federpaar ist zwischen einem gemeinsamen Widerlager der Sitzaufnahme und sich gegenüberliegenden Abschnitten des Zwischenteils eingehängt und liegt parallel zu den ersten Achsen.

Das Zwischenteil hat dabei vorzugsweise die Form einer ebenen Platte, die von dem ersten Federpaar in eine mittige Ausgangsstellung gegenüber dem Bodenteil gezogen wird. Das zweite Federpaar zentriert entsprechend die Sitzaufnahme gegenüber dem Zwischenteil.

Auf der Sitzaufnahme ist der eigentliche Sitz drehbar montiert.

Weitere Einzelheiten der Erfindung, ihre Wirkungsweise sowie Vorteile werden anhand von Ausführungsbeispielen näher erläutert.

In der Zeichnung sind zwei als Beispiele dienende Ausführungsformen der Erfindung dargestellt. Es zeigt

Fig. 1 in perspektivischer Darstellung einen Sitz mit einer vibrationsgedämpften Sitzlagerung;

Fig. 2 in einer Explosionsdarstellung die Sitzlagerung gemäß Fig. 1;

Fig. 3 in vergrößertem Maßstab eine in Fig. 2 dargestellte Lagerplatine in Draufsicht;

Fig. 4 in Draufsicht und zusammengebautem Zustand die Sitzlagerung gemäß Fig. 2, wobei ein Sitzkissen mit gestrichelter Linie angedeutet ist;

Fig. 5 die Darstellung gemäß Fig. 4 in Seitenansicht, wobei ein Teil des Sitzkissens mit gestrichelter Linie angedeutet ist;

Fig. 6 einen Schnitt gemäß der Linie 6-6 in Fig. 5;

Fig. 7 einen Schnitt gemäß der Linie 7-7 in Fig. 5;

Fig. 8 die Darstellung gemäß Fig. 4 in Stirnansicht;

Fig. 9 ein Ausschnitt der Darstellung gemäß Fig. 7 in Stirnansicht;

Fig. 10 in Explosionsdarstellung eine Verriegelungseinrichtung für die Längsverschiebung der Sitzlagerung;

Fig. 11 in perspektivischer Darstellung einen Drehverriegelungshebel;

Fig. 12 in Explosionsdarstellung eine Dämpfungsverriegelungseinrichtung und

Fig. 13 in Explosionsdarstellung eine abgewandelte Ausführungsform für eine vabrationsgedämpfte Sitzlagerung.

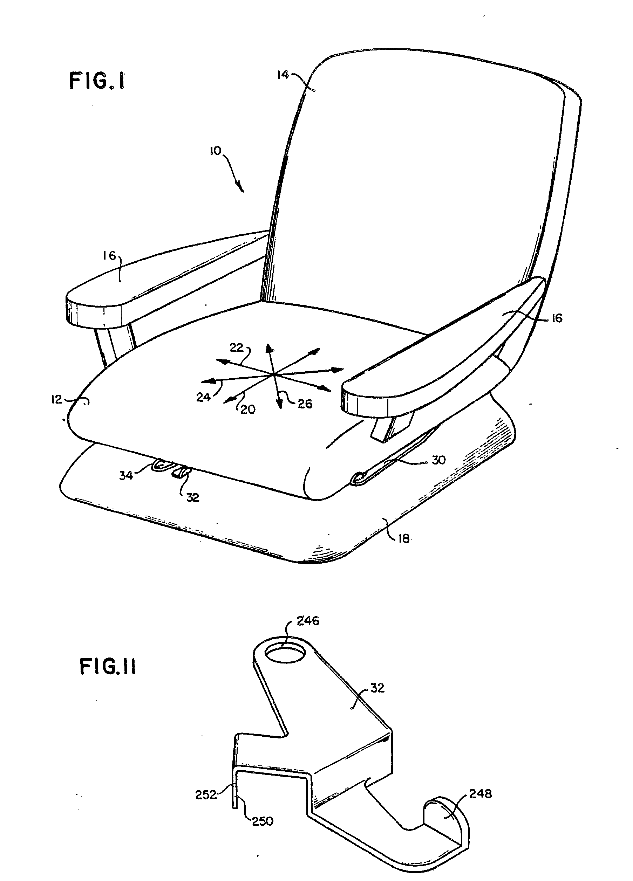

Fig. 1 zeigt einen vibrationsgedämpften Sitz 10 mit einem Sitzkissen 12, einer Rückenlehne 14 und Armlehnen 16. Der Sitz 10 kann gegenüber einem Sitzträger 18 innerhalb einer Horizontalebene in allen Richtungen gedämpfte Bewegungen ausführen, wie es die Pfeile 20, 22, 24 und 26 andeuten. Der Doppelpfeil 20 zeigt dabei in Längsrichtung.

Der Sitz 10 ist mit drei manuell zu bedienenden Steuereinrichtungen ausgerüstet und zwar mit einem Verriegelungshebel 30 für die Längsverschiebung des Sitzes, einem Drehverriegelungshebel 32 zur Blockierung der Rotation des Sitzes gegenüber dem Sitzträger und mit einem Dämpfungsverriegelungshebel 34 zur Blockierung der Dämpfungseinrichtung.

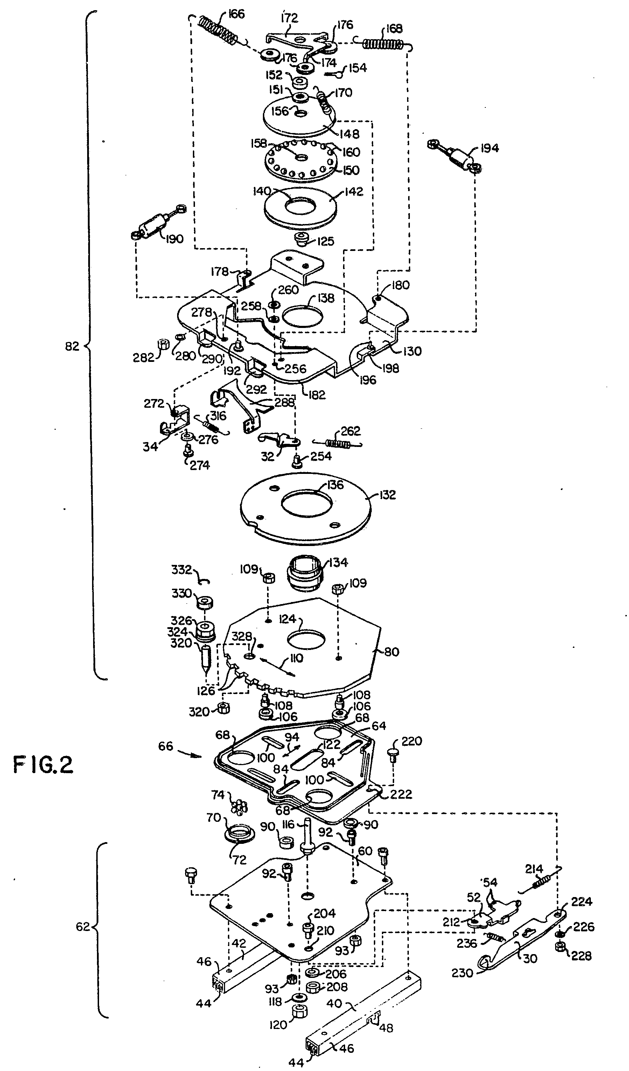

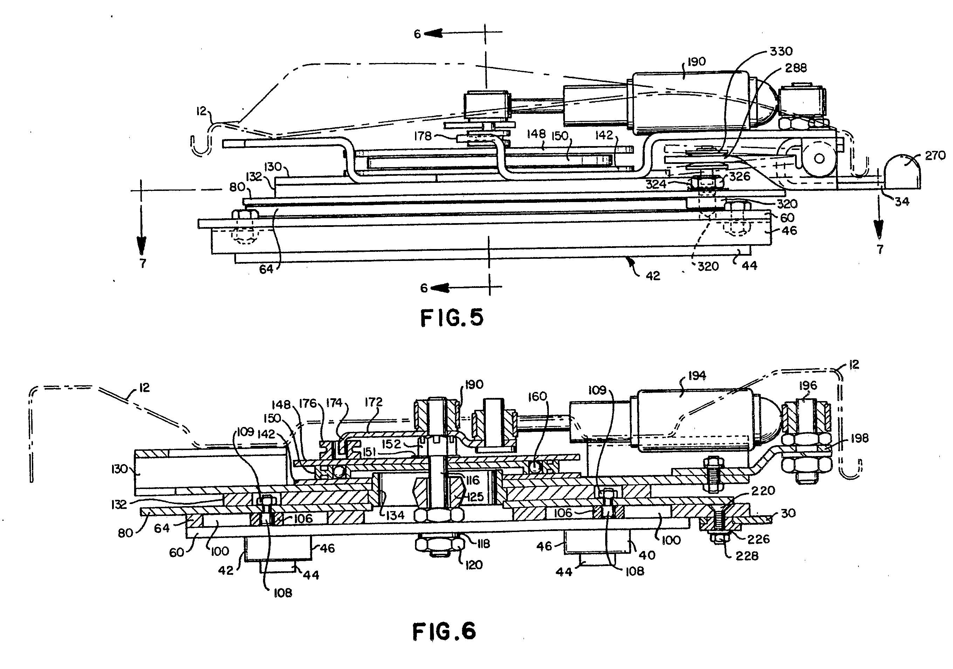

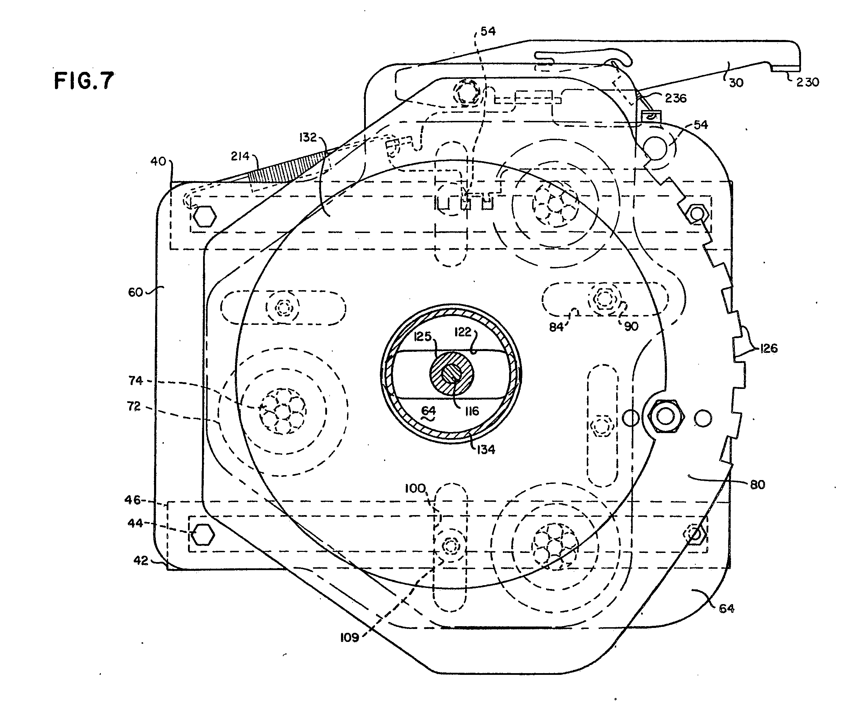

Die eigentliche Sitzlagerung ist in Fig. 1 durch das Sitzkissen 12 verdeckt, ist aber in den Fig. 2 bis 12 im einzelnen dargestellt. Die beste Übersicht enthält Fig. 2. Demnach ist eine Verschiebeinrichtung 40, 42 vorgesehen, die aus jeweils doppelten Gleitschienen 44, 46 besteht, die im Abstand voneinander und parallel zueinander angeordnet sind. Die unteren Schienen 44 sind auf dem Sitzträger 18 ortsfest angeordnet, während die die unteren Schienen übergreifenden oberen Schienen 46 mit der eigentlichen Sitzlagerung verbunden sind. Durch eine Aussparung im Rand der oberen Schiene 46 der Verschiebeinrichtung 40 ist eine Zahnung 48 erkennbar, die sich am Längsrand der unteren Schiene 44 befindet und in die Zähne 54 einer Einstellklinke 52 eingreifen, die wiederum von dem genannten Verriegelungshebel 30 betätigt wird, um den Sitz 10 in seiner gewünschten Verschiebestellung gegenüber den unteren Schienen 44 zu arretieren.

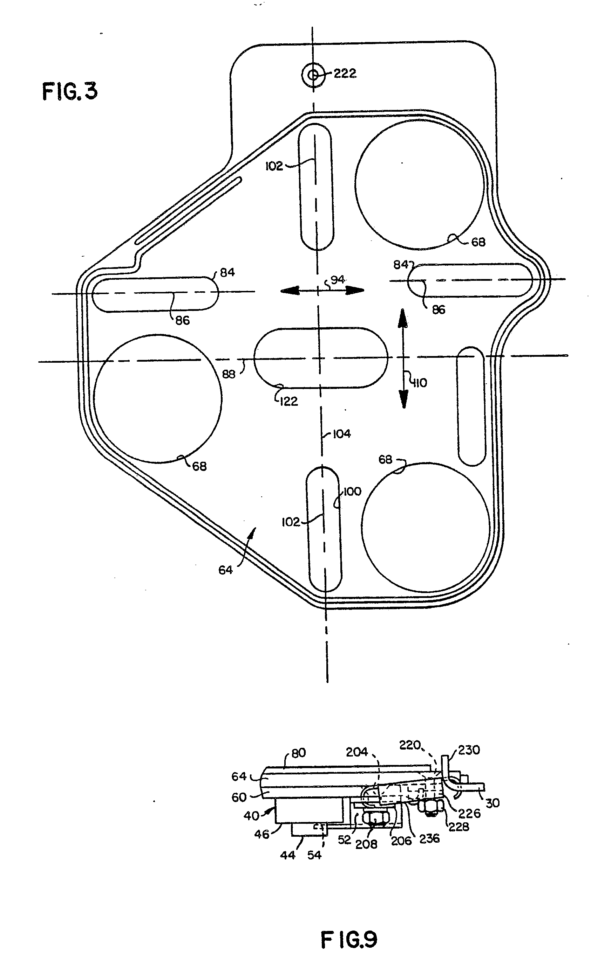

Auf die oberen Schienen 46 der Verschiebeinrichtung 40, 42 ist eine Bodenplatte 60 geschraubt, die zusammen mit der Verschiebeinrichtung eine Bodengruppe 62 bildet. Auf der Bodenplatte 60 ist eine Lagerplatine 64 montiert (siehe Fig. 3), die ein Zwischenteil 66 der Sitzanordnung bildet. In drei Bohrungen 68 der Lagerplatine 64 sind jeweils Lagerhalterungen 70 angeordnet, die jeweils aus einem Filzring 72 bestehen, in dem mehrere Lagerkugeln 74 angeordnet sind. Letztere stützen sich auf der Bodenplatte 60 ab und liegen gegen die untere Fläche einer unteren Lagerplatte 80 an, die das Bodenteil einer Sitzaufnahme 82 darstellt. Die drei Lager 70, 74 ermöglichen eine Relativbewegung der Lagerplatine 64 gegenüber der Bodenplatte 60 sowie eine Relativbewegung der unteren Lagerplatte 80 gegenüber der Lagerplatine 64. Diese Relativverschiebungen sind auf vorbestimmte Achsen festgelegt. Hierfür sind im vorderen und hinteren Abschnitt der Lagerplatine 64 zwei erste Längsschlitze 84 angeordnet (siehe Fig. 3), deren Längsachsen 86 parallel zu einer ersten Verschiebungsachse 88 in Längsrichtung, also in Vorwärts- bzw. Rückwärtsrichtung liegen. In die Längsschlitze 84 greifen erste Rollen 90 ein, die auf der Oberseite der Bodenplatte 60 über Zapfen 92 und Muttern 93 befestigt sind. Dadurch kann die Lagerplatine 64 in Richtung des Doppelpfeiles 94, der parallel zur ersten Verschiebungsachse 88 liegt, nach vorn oder zurück verschoben werden, wobei die Längsschlitze 84 an den Rollen 90 entlanggleiten. Hierbei rollen die Lagerkugeln 74 auf der Oberfläche der Bodenplatte 60 ab und ermöglichen die Gleitbewegung. Durch diese Konstruktion wird somit eine Relativverschiebung des Zwischenteils 66 gegenüber der Bodengruppe 62 entlang der ersten Verschiebungsachse 88 ermöglicht.

An sich gegenüberliegenden Seiten der Lagerplatine 64 sind zweite Längsschlitze 100 vorgesehen, deren Längsachsen 102 parallel zu einer zweiten Verschiebungsachse 104 liegen, die senkrecht zur ersten Verschiebungsachse 88 verläuft und sich quer zum Sitz 10 erstreckt. An der Unterseite der unteren Lagerplatte 80 sind zweite Rollen 106 über Zapfen 108 und Muttern 109 drehbar gelagert, die in die Längsschlitze 100 eingreifen und dadurch eine Verschiebung der unteren Lagerplatte 80 gegenüber der Lagerplatine 64 entlang der zweiten Verschiebungsachse 104 gemäß dem Doppelpfeil 110 ermöglichen. Dadurch kann die Sitzaufnahme 82 eine lineare Verschiebung gegenüber dem Zwischenteil 66 ausführen.

In der Mitte der Bodenplatte 60 ist ein Stehbolzen 116 über einen Federring 118 und eine Gegenmutter 120 befestigt und erstreckt sich lotrecht nach oben durch einen Längsschlitz 122 in der Lagerplatine 64 und eine mittige Bohrung 124 der unteren Lagerplatte 80 hindurch. Oberhalb der Bodenplatte 60 ist der Stehbolzen 116 mit einer Gummibuchse 125 versehen. Längsschlitze 122 und Bohrung 124 sind gegenüber dem Durchmesser des Stehbolzens 116 so weit überdimensioniert, daß eine ausreichende Dämpfungsbewegung zwischen Bodenplatte 60, Lagerplatine 64 und unterer Lagerplatte 80 sichergestellt ist. Ein äußerer Randabschnitt der unteren Lagerplatte 80 ist mit einer Zahnung 126 versehen, die zur Drehverriegelung dient, wie später im Detail erläutert wird.

Sitzkissen 12, Rückenlehne 14 sowie Armlehnen 16 (siehe Fig. 1) sind auf einer Sitzmontageplatte 130 montiert, die gegenüber der unteren Lagerplatte 80 drehbar gelagert ist. Hierfür ist eine Drehscheibe 132 vorgesehen, die auf der unteren Lagerplatte 80 angeordnet ist und aus Kunststoff o. dgl. besteht, um so eine Verschiebung der Sitzmontageplatte 130 zu ermöglichen. Sitzmontageplatte 130, Drehscheibe 132 und untere Lagerplatte 80 werden konzentrisch zueinander gehalten durch eine Lagerhülse 134, die in der mittigen Bohrung 124 der unteren Lagerplatte 80 montiert ist und sich durch mittige Bohrungen 136, 138 in der Drehscheibe 132 bzw. der Sitzmontageplatte 130 erstreckt, wobei diese mittigen Bohrungen einen etwas größeren Durchmesser aufweisen als die Lagerhülse 134. Das obere Ende der Lagerhülse 134 ragt in eine mittige Bohrung 140 in einer unteren Lagerscheibe 142, die auf der Sitzmontageplatte 130 angeordnet ist. Bei ausreichend großer Dämpfungsverschiebung der Sitzaufnahme 82 stößt die Lagerhülse 134 gegen die Gummibuchse 125 des Stehbolzens 116.

Um Sitzaufnahme 82, Zwischenteil 66 und Bodengruppe 62 zusammen zu halten, ist es erforderlich, die Aufwärtsbewegung der Sitzmontageplatte 130 gegenüber der Bodenplatte 60 zu begrenzen. Dies wird durch eine obere Lagerscheibe 148 und einen Lagerkäfig 150 erreicht, die am oberen Ende des Stehbolzens 116 durch einen Federring 151, eine Schlitzmutter 152 und einen Sicherungsstift 154 befestigt sind. Der Stehbolzen 116 erstreckt sich durch eine mittige Bohrung 156 der oberen Lagerscheibe 148 sowie durch eine mittige Bohrung 158 des Lagerkäfigs 150. Letzterer weist in seinem äußeren Randbereich mehrere Lagerkugeln 160 auf, die sich auf der unteren Lagerscheibe 142 abstützen und gegen die Unterseite der oberen Lagerscheibe 148 anliegen. Bei einer Relativverschiebung zwischen Lagerplatine 64 und unterer Lagerplatte 80 relativ gegenüber der Bodenplatte 60 wird die Lagerhülse 134 aus ihrer konzentrischen Anordnung relativ zum Stehbolzen 116 gezogen und bewegt sich während der genannten Verschiebung um den Stehbolzen 116 herum. Eine gleiche Bewegung vollziehen die über die Lagerhülse 134 miteinander verbundenen Drehscheibe 132, Sitzmontageplatte 130 und untere Lagerscheibe 142, während die obere Lagerscheibe 148 ihre konzentrische Lage gegenüber dem Stehbolzen 116 beibehält. Die Relativbewegung wird ermöglicht durch die Lagerkugeln 160, die auf der Oberfläche der unteren Lagerscheibe 142 abrollen, wenn diese eine Relativbewegung gegenüber dem Lagerkäfig 150 und der oberen Lagerscheibe 148 ausführt.

Der Sitz 10 wird üblicherweise in einer Zentrierstellung gehalten, indem die Sitzmontageplatte 130 so positioniert wird, daß der Stehbolzen 116 im Zentrum der mittigen Bohrung 138 der Sitzmontageplatte 130 liegt. Dies wird erreicht durch drei Federn 166, 168 und 170, die im gleichen Abstand voneinander um den Stehbolzen 116 herum angeordnet und zwischen diesem Stehbolzen und verschiedenen Abschnitten der Sitzmontageplatte 130 eingehängt sind. Die Federbefestigung an dem Stehbolzen 116 erfolgt über einen Speichenstern 172 mit drei Speichen 174, die jeweils in einer Rolle 176 auslaufen, um die jeweils ein Ende der genannten Federn gewickelt ist. Das andere Ende der Feder 166 ist an einem Vorsprung 178 an der rechten Seite der Sitzmontageplatte 130 eingehängt, während das andere Ende der Feder 168 an einem Vorsprung 180 in der hinteren linken Ecke der Sitzmontageplatte 130 und das andere Ende der Feder 170 an einer im Stirnbereich der Sitzmontageplatte 130 befindlichen Stufe 182 eingehängt sind. Wenn auf den Sitz 10 keine weiteren Kräfte einwirken, halten die Federn 166, 168 und 170 den Stehbolzen 116 im Zentrum der mittigen Bohrung 138, der Sitz 10 befindet sich dann in seiner üblichen Zentrierstellung. Wirken jedoch zusätzliche Kräfte auf den Sitz 10 ein, die eine Relativverschiebung zwischen unterer Lagerplatte 80, Lagerplatine 64 und Bodenplatte 60 bewirken, lassen die genannten Federn diese Relativbewegung zu, setzen der Verschiebung aber einen Widerstand gewünschter Größe entgegen.

Die Bewegung des Sitzes 10 gegenüber der Bodenplatte 60 wird durch ein Paar Stoßdämpfer gedämpft. Ein Längsstoßdämpfer 190 ist mit seinem einen Ende am oberen Ende des Stehbolzens 116 und mit seinem anderen Ende an einem sich von der Stufe 182 der Sitzmontageplatte 130 nach oben erstreckenden Stift 192 angelenkt und liegt parallel zur ersten Verschiebungsachse 88 und dient zur Dämpfung der Bewegung der Lagerplatine 64 relativ gegenüber der Bodenplatte 60. Rechtwinklig zum Längsstoßdämpfer liegt ein Querstoßdämpfer 194, der mit seinem einen Ende am Speichenstern 172 und mit seinem anderen Ende an einem sich von einem Vorsprung 198 auf der linken Seite der Sitzmontageplatte 130 nach oben erstreckenden Stift 196 angelenkt ist und die Bewegung der unteren Lagerplatte 80 einschließlich der Sitzmontageplatte 130 relativ gegenüber der Lagerplatine 64 dämpft.

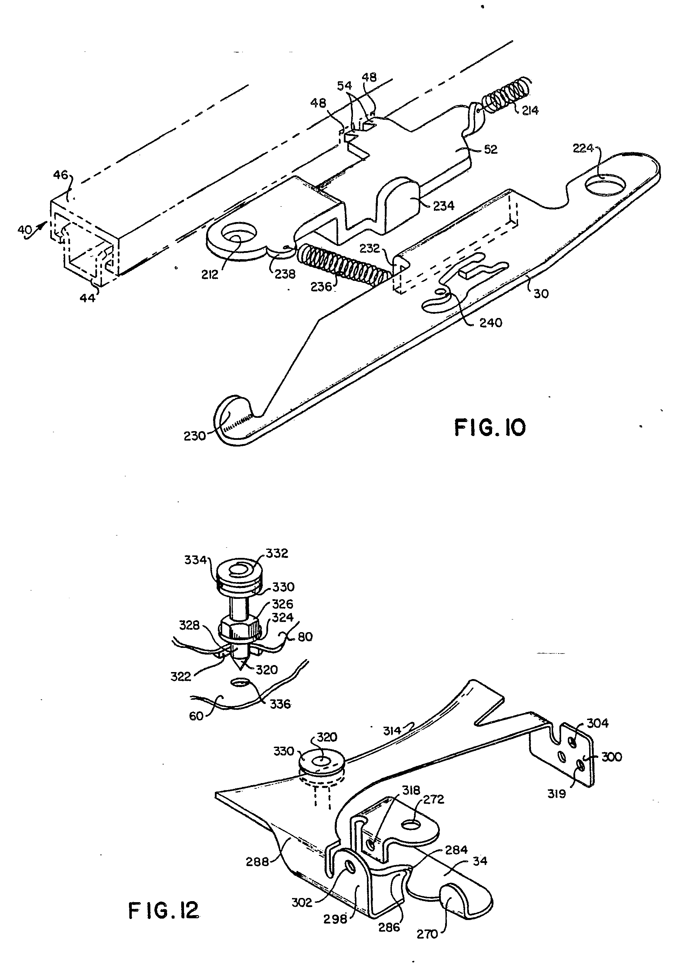

Einzelheiten der Verschiebeeinrichtung 40, 42 sowie der entsprechenden Verriegelung zeigen neben der Fig. 2 vor allem die Fig. 9 und 10. Die Einstellklinke 52 ist auf der Unterseite der Bodenplatte 60 neben der Verschiebeeinrichtung 40 über eine Schraube 204, eine Buchse 206 und eine Mutter 208 angelenkt. Dabei ragt die Schraube 204 nach unten durch eine Bohrung 210 in der Bodenplatte 60 und durch eine Bohrung 212 im Ende der Einstellklinke 52, die normalerweise unter der Wirkung einer Klinkenfeder 214 um die Schraube 204 in eine Position verschwenkt wird, in der die Zähne 54 in die Zahnung 48 der unteren Schiene 44 eingreifen. Die beiden Enden der Klinkenfeder 214 sind einerseits am Ende der Einstellklinke 52 neben der Bohrung 212 und andererseits an der Bodenplatte 60 neben der Verschiebeeinrichtung 40 eingehängt. In der genannten Eingriffsstellung sind die Bodenplatte 60 zusammen mit der oberen Schiene 46 gegenüber der unteren Schiene 44 verriegelt.

Um den Sitz in Längsrichtung verschieben zu können, wird der Verriegelungshebel 30 manuell betätigt, der auf der Unterseite am Rand der Lagerplatine 64 über eine Schraube 220 angelenkt ist, die sich durch eine Bohrung 222 im Rand der Lagerplatine 64 und durch eine Bohrung 224 im Ende des Verriegelungshebels 30 erstreckt, wo sie durch einen Federring 226 und eine Sechskantmutter 228 festgelegt ist. Für die Betätigung des Verriegelungshebels 30 ist ein gegenüber von der Bohrung 224 liegender und sich nach oben erstreckender Lappen 230 vorgesehen, der

gemäß Fig. 1 unter dem Sitz 10 herausragt. Auf einer Seite des Verriegelungshebels 30 ist ein nach unten ragender Flansch 232 vorgesehen, der eine nach oben ragende Nase 234 an der Seite der Einstellklinke 52 übergreift. Wird der Verriegelungshebel 30 von der Verschiebeeinrichtung 40 weggeschwenkt, erfolgt über Flansch 232 und Nase 234 eine Verschwenkung der Einstellklinke 52 weg von der Verschiebeeinrichtung 40, so daß die Zähne 54 außer Eingriff kommen mit der Zahnung 48. Wird der Verriegelungshebel 30 losgelassen, so zieht die Klinkenfeder 214 die Zähne 54 wieder in Eingriff mit der Zahnung 48. Diese Rückverschwenkung wird unterstützt durch eine Hebelfeder 236, die zwischen einer Nase 238 neben der Bohrung 212 der Einstellklinke 52 und einer Nase 240 im mittleren Bereich des Verriegelungshebels 30 eingehängt ist. Wegen der möglichen Relativverschiebung zwischen Lagerplatine 64 und Bodenplatte 60 ergibt sich auch eine Relativverschiebung zwischen Verriegelungshebel 30 und Einstellklinke 52. Hierbei gleitet dann der Flansch 232 an der Nase 234 entlang; der Flansch 232 ist deshalb länger ausgebildet als die Nase 234, um so während der Längsverschiebung immer einen Eingriff sicherzustellen.

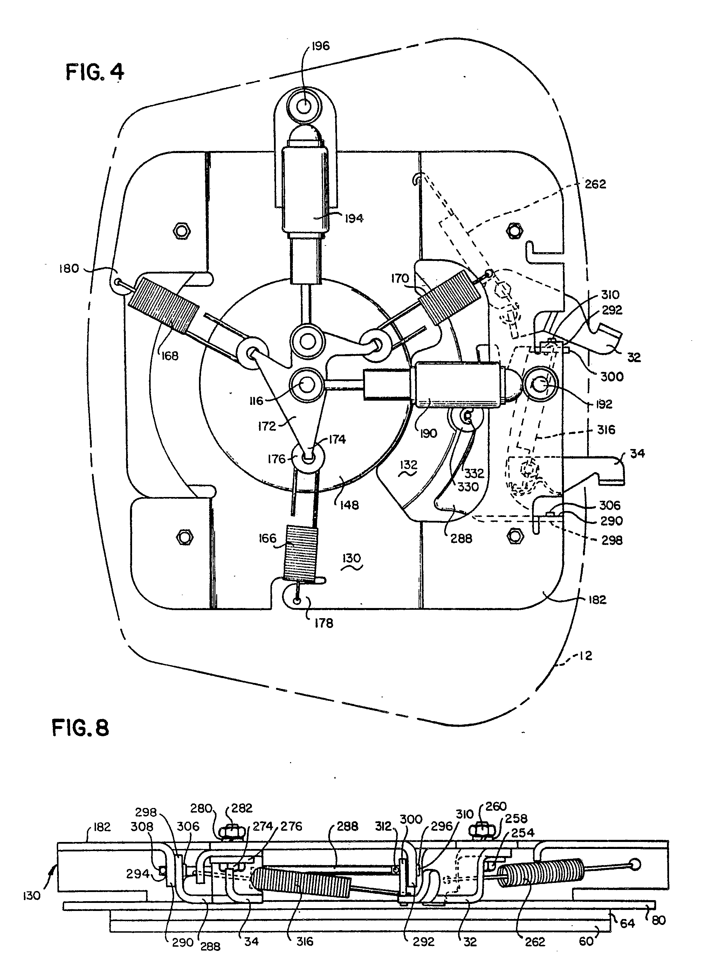

Die für den Sitz vorgesehene Drehverriegelung ist neben der Fig. 1 insbesondere in den Fig. 4, 8 und 11 dargestellt. Gemäß Fig. 11 weist der Drehverriegelungshebel 32 an seinem einen Ende eine Bohrung 246 und an seinem anderen Ende zur manuellen Betätigung einen Lappen 248 auf, der gemäß Fig. 1 unter dem Sitz 10 hervorragt. Auf der einen Seite des Drehverriegelungshebels 32 ist ein nach unten ragender Haken 250 mit einer Bohrung 252 angeordnet. Der Drehverriegelungshebel 32 ist auf der Unterseite der Stufe 182 der Sitzmontageplatte 130 über eine Schraube 254 angelenkt, die sich nach oben durch eine Buchse sowie durch die Bohrung 246 und durch eine Bohrung 256 der Stufe 182 erstreckt und über einen Federring 258 und eine Sechskantmutter 260 festgelegt ist. Eine Feder 262 ist mit ihrem einen Ende in die Bohrung 252 des Hakens 250 und mit ihrem anderen Ende in einen rückwärtigen Teil der Stufe 182 eingehängt.

Fig. 4 läßt erkennen, daß der Drehverriegelungshebel 32 und die Feder 262 so angeordnet sind, daß letztere den genannten Hebel in einer von zwei Stellungen hält. Wird der Hebel 32 gemäß Fig 4 entgegen dem Uhrzeigersinn verschwenkt, zieht sich die Feder 262 zusammen und hält den Hebel in dieser Stellung, in der der Haken 250 im Abstand von der Zahnung 126 der unteren Lagerplatte 80 liegt; der Sitz kann also frei rotieren. Wird der Hebel 32 hingegen im Uhrzeigersinn verschwenkt, dehnt sich die Feder 262 zuerst aus, wenn der genannte Hebel eine mittlere Stellung durchläuft, zieht sich dann aber zusammen, wenn der Hebel seine gegenüberliegende Stellung erreicht hat und hält so den Hebel in dieser zweiten Stellung, in der der untere Rand des Hakens 250 in die Zahnung 126 eingreift und so den Sitz gegen eine Drehung verriegelt. Da sich die Zahnung 126 über einen Abschnitt des äußeren Randes der unteren Lagerplatte 80 erstreckt, kann der Sitz 10 in verschiedenen Winkelstellungen arretiert werden.

Einzelheiten der Dämpfungsverriegelungseinrichtung zeigen neben der Fig. 2 insbesondere die Fig. 4, 5, 8 und 12. Der Dämpfungsverriegelungshebel 34 weist einen unter dem Sitz hervorragenden Lappen 270 zur manuellen Betätigung auf und ist an seinem einen Ende nach oben und in Richtung auf den genannten Lappen agebogen und endet in einem eine Bohrung 272 aufweisenden Abschnitt. Der Dämpfungsverriegelungshebel 34 ist an der Unterseite der Stufe 182 der Sitzmontageplatte 130 über eine Schraube 274 angelenkt, die durch eine Buchse 276, die Bohrung 272 und durch eine Bohrung 278 in der Stufe 182 ragt und über einen Federring 280 und eine Sechskantmutter 282 festgelegt ist. Gemäß Fig. 12 weist der genannte Hebel 34 in seinem mittleren Bereich eine Nut 284 auf, die einen Zahn 286 einer Dämpfungsverriegelungsplatine 288 aufnehmen kann, die ihrerseits an der Unterseite der Stufe 182 angelenkt ist. Letztere ist in ihrem Stirnbereich mit zwei im Abstand voneinander liegenden und nach unten ragenden Vorsprüngen 290, 292 versehen, die Bohrungen 294, 296 aufweisen. Die Dämpfungsverriegelungsplatine 288 ist mit zwei sich gegenüberliegenden Flanschen 298, 300 versehen, die die Vorsprünge 290, 292 beaufschlagen und Bohrungen 302, 304 aufweisen. Ein Stift 306 ragt durch die Bohrungen 302 und 294 und ist dort durch einen Sicherungsstift 308 gesichert. Ein weiterer Stift 310 ragt durch die Bohrungen 304 und 296 und ist dort durch einen Sicherungsstift 312 gesichert.

Die Dämpfungsverriegelungsplatine 288 ist um die Stifte 306 und 310 so verschwenkbar, daß durch die Verschwenkung ein auf der Rückseite der Dämpfungsplatine vorgesehener Bogenrand 314 angehoben bzw. abgesenkt wird. Wird der Dämpfungsverriegelungshebel 34 gegen die Wirkung einer Feder 316 verschwenkt, die in eine Bohrung 318 im Hebel 34 und in eine Bohrung 319 des Flansches 300 eingehängt ist und den Hebel 34 in seine eine oder andere von zwei Stellungen zieht, dann beaufschlagt die Nut 284 des Hebels 34 den Zahn 286 und verschwenkt durch diese Nockenwirkung die Dämpfungsverriegelungsplatine 288.

Ein lotrecht weisender Kupplungsstift 320 ist auf der Unterseite der unteren Lagerplatte 80 in einer Stiftführung 322 verschiebbar gelagert, die auf der Oberseite der genannten Lagerplatte über einen Federring 324 und eine Gegenmutter 326 festgelegt ist. Der Kupplungsstift 320 ragt durch eine Bohrung 328 in der unteren Lagerplatte 80 und ist in lotrechter Richtung frei verschiebbar innerhalb der Stiftführung 322, dem Federring 324 und der Gegenmutter 326. Am oberen Ende des Kupplungsstiftes 320 ist eine Rolle 330 über einen Sprengring 322 festgelegt, die an ihrem Außenumfang eine Nut 334 aufweist, die zur Aufnahme des Bogenrandes 314 der Dämpfungsverriegelungsplatine 288 dient, wenn der Sitz 10 im wesentlichen nach vorne weist, so daß ein Abschnitt des Bogenrandes 314 innerhalb der Nut 334 liegt.

Befindet sich der Sitz 10 in seiner üblichen Zentrierstellung, kann die Dämpfungsbewegung ausgeschlossen werden durch Verschwenkung des Dämpfungsverriegelungshebels 34, wodurch die Dämpfungsverriegelungsplatine 288 nach unten verschwenkt wird. Durch diese abwärts gerichtete Bewegung drückt der Bogenrand 314 die Rolle 330 und damit den Kupplungsstift 320 nach unten, bis letzterer in eine Bohrung 336 im vorderen Bereich der Bodenplatte 60 eintaucht. In dieser Stellung des Kupplungsstiftes 320 ist die Sitzaufnahme 82 durch den Zwischenteil 66 gegenüber der Bodengruppe 62 verriegelt, so daß keine Dämpfungsbewegung möglich ist. Um die Dämpfungsbewegung wieder zu ermöglichen, wird der Dämpfungsverriegelungshebel 34 so verschwenkt, daß die Dämpfungsverriegelungsplatine 288 nach oben schwenkt und dadurch die Rolle 330 bzw. den daran hängenden Kupplungsstift 320 anhebt, bis letzterer vollständig aus der Bohrung 336 ausgehoben ist; die Lagerplatine 64 sowie die untere Lagerplatte 80 können sich dann wieder frei gegenüber der Bodenplatte 60 drehen.

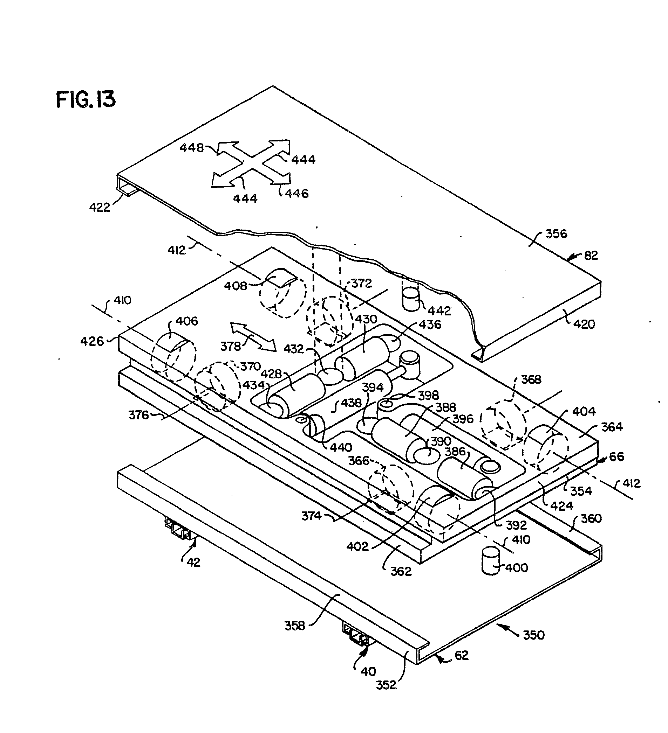

Fig. 13 zeigt eine abgewandelte Ausführungsform für einen vibrationsgedämpften Sitz 350. Dieser umfaßt eine Bodengruppe 62 mit einer Bodenplatte 352, einen Zwischenteil 66 mit einem Rollensystem 354 und eine Sitzaufnahme 82 mit einer Sitzmontageplatte 356. Sitzkissen, Rükkenlehne und Armlehnen sowie die Dreheinrichtung für den eigentlichen Sitz sind aus Gründen der besseren Übersichtlichkeit nicht dargestellt. Jede Dreheinrichtung kann Verwendung finden.

Die Bodenplatte 352 ist auf der Verschiebeeinrichtung 40, 42 montiert. Gegenüberliegende Randbereiche der Bodenplatte 352 bilden Führungen 358 und 360, die die sich gegenüberliegenden Ränder 362, 364 des Rollensystems 354 aufnehmen.

Das Rollensystem 354 umfaßt eine erste Rollengruppe, die aus vier Rollen, 366, 368, 370 und 372 besteht, die um erste Achsen drehen, die eine Drehachse 374 für die Rollen 366 und 368 sowie eine parallel hierzu liegende Achse 376 für die Rollen 370 und 372 umfassen. Die erste Rollengruppe ragt über die Unterseite des Rollensystems 354 hinaus und stützt sich auf der Oberfläche der Bodenplatte 352 ab. Dementsprechend kann das Rollensystem 354 gegenüber der Bodenplatte 352 eine Längsverschiebung entsprechend dem Doppelpfeil 378 durchführen. Diese Verschiebebewegung erfolgt gegen die Wirkung eines ersten Federpaares 386, 388. Das eine Ende der beiden Federn ist an einem Widerlager 390 der Bodenplatte 352 eingehängt, während die anderen Federenden an sich gegenüberliegenden Abschnitten 392, 394 des Rollensystems 354 eingehängt sind. Beide Federn liegen parallel zum Doppelpfeil 378. Die Bewegung des Rollensystems 354 entsprechend dem Doppelpfeil 378 wird gedämpft durch einen parallel zu den genannten Federn angeordneten Stoßdämpfer 396, der mit seinem einen Ende an einem Widerlager 398 des Rollensystems 354 und mit seinem anderen Ende an einem Widerlager 400 der Bodenplatte 352 angelenkt ist.

Das Rollensystem 354 umfaßt ferner eine zweite Rollengruppe, die aus vier Rollen, 402, 404, 406 und 408 besteht, die um zweite Achsen rotieren. Letztere umfassen zwei parallel zueinander liegende Achsen 410 für die Rollen 402, 406 und 412 für die Rollen 404 und 408. Die Rollen der zweiten Rollengruppe ragen oben über das Rollensystem 354 hinaus und liegen gegen die Unterseite der Sitzmontageplatte 356 an, die dadurch gegenüber dem Rollensystem 354 entlang einer Verschiebungsachse verschiebbar ist, die senkrecht zum Doppelpfeil 378 und somit in Längsrichtung bzw. in Vorwärts- bzw. Rückwärtsrichtung liegt. Eine Querverschiebung der Sitzmontageplatte 356 gegenüber dem Rollensystem 354 wird verhindert durch U-förmig nach unten und innen abgebogene, an sich gegenüberliegenden Rändern der Sitzmontageplatte 356 angeordneten Führungen 420 und 422, die die sich gegenüberliegenden Ränder 424 bzw. 426 des Rollensystems 354 übergreifen.

Die Verschiebung der Sitzmontageplatte 356 gegenüber dem Rollensystem 354 erfolgt gegen die Wirkung eines zweiten Federpaares 428, 430, das in Längsrichtung und somit senkrecht zur Achse der Federn 386, 388 liegt. Das eine Ende beider Federn 428, 430 ist an einem auf der Unterseite der Sitzmontageplatte 356 angeordneten Widerlager 432 eingehängt, während die gegenüberliegenden Enden der beiden Federn an sich gegenüberliegenden Abschnitten 434, 436 des Rollensystems 354 eingehängt sind. Die Verschiebung der Sitzmontageplatte 356 gegenüber dem Rollensystem 354 wird durch einen Stoßdämpfer 438 gedämpft, der parallel zur Achse der Federn 428, 430 liegt und mit seinem einen Ende an einem Widerlager 440 auf dem Rollensystem 354 und mit seinem anderen Ende an dem Widerlager 442 an der Unterseite der Sitzmontageplatte 356 angelenkt ist.

Wirken Vibrationen oder andere Bewegungen auf den auf der Sitzmontageplatte 356 montierten Sitz ein, erfolgt eine Verschiebung der Sitzmontageplatte 356 gegenüber dem Rollensystem 354 in Längsrichtung, also nach vorn bzw. zurück, was durch die Rollen 402, 404, 406 und 408 ermöglicht wird und gegen die Wirkung der Federn 428, 430 und den Stoßdämpfer 438 erfolgt. Gleichzeitig kann das Rollensystem 354 eine Längsverschiebung gegenüber der Bodenplatte 352 ausüben und zwar über die Rollen 366, 368, 370 und 372, gegen die Wirkung der Federn 386, 388 und des Stoßdämpfers 396. Der Sitz kann sich somit innerhalb einer Horizontalebene in jede beliebige Richtung verschieben. Die zulässige Längsverschiebung der Sitzmontageplatte 356 gegenüber dem Rollensystem 354 ist durch den Doppelpfeil 444, die zulässige Querverschiebung der Sitzmontageplatte 356 gegenüber der Bodenplatte 352 hingegen durch die Pfeile 446, 448 dargestellt, die mit dem Pfeil 378 übereinstimmen.

Die Ausführungsformen gemäß den Fig. 1 bis 12 einerseits und der Fig. 13 andererseits stellen lediglich zwei Beispiele für vibrationsgedämpfte Sitze gemäß der Erfindung dar. Die Erfindung ist aber nicht auf diese Ausführungsbeispiele beschränkt, sondern umfaßt alle Abwandlungen, Modifikationen und dergleichen, die einem Durchschnittsfachmann durch vorstehende Erläuterungen nahegelegt sind. Beispielsweise können die die Zentrier- und Dämpfungseinrichtung bildenden Federn und Stoßdämpfer durch ein pneumatisches oder hydraulisches System ersetzt werden. Eine derartige Konstruktion ließe sich verhältnismäßig einfach in Ringform darstellen, wobei innerhalb einer Horizontalebene ein erster Ring relativ gegenüber einem von ihm konzentrisch umschlossenen zweiten Ring in jeder Richtung drehbar ist. Dabei wird der erste Ring in seiner Zentrierstellung von einer ersten Gruppe von mit Luft oder Flüssigkeit gefüllten Blasen gehalten, die im Abstand voneinander zwischen dem ersten und zweiten Ring angeordnet sind und als Federn wirken, gegen deren Widerstand die Verschiebung des ersten Ringes aus seiner Zentrierstellung erfolgt. Die genannten Blasen können an eine gemeinsame Druckluft- oder Flüssigkeitsquelle angeschlossen sein. Zwischen den ersten Blasen kann eine zweite Gruppe von mit Luft oder Flüssigkeit gefüllten Blasen angeordnet sein, die als Stoßdämpfer wirken.

## Patentansprüche

1. Vibrationsgedämpfte Sitzlagerung (10; 350) mit einer Sitzaufnahme (82), die gegenüber einem Bodenteil (62) innerhalb einer Horizontalebene in jeder Richtung (20, 22, 24, 26) relativ begrenzt gedämpft verschiebbar und dem Bodenteil gegenüber in einer Zentrierstellung federelastisch gehalten ist, dadurch gekennzeichnet, daß zwischen Bodenteil (62) und Sitzaufnahme (82) ein Zwischenteil (66) vorgesehen ist, das gegenüber dem Bodenteil (62) in nur einer Richtung (94; 378) relativ begrenzt verschiebbar ist, während die Sitzaufnahme (82) gegenüber dem Zwischenteil (66) nur in einer zweiten Richtung (110; 444) relativ begrenzt verschiebbar ist, wobei die beiden Verschiebungsachsen (88, 104; 444, 446, 448) senkrecht aufeinander stehen.

2. Sitzlagerung nach Anspruch 1, gekennzeichnet durch folgende Merkmale:

a) Es weisen das Bodenteil (62) eine Bodenplatte (60), das Zwischenteil (66) eine Lagerplatine (64) und die Sitzaufnahme (82) eine untere Lagerplatte (80) sowie eine Sitzmontageplatte (130) auf;

b) in der Lagerplatine (64) sind mehrere Lager (74) angeordnet, die auf der Bodenplatte (60) aufliegen und gegen die untere Lagerplatte (80) anliegen;

c) die Lagerplatine (64) ist gegenüber der Bodenplatte (60) entlang der ersten Verschiebungsachse (88) verschiebbar;

d) die untere Lagerplatte (80) ist gegenüber der Lagerplatine (64) entlang der zweiten Verschiebungsachse (104) verschiebbar;

e) die Sitzmontageplatte (130) ist oberhalb der unteren Lagerplatte (80) und dieser gegenüber drehbar angeordnet.

3. Sitzlagerung nach Anspruch 2, gekennzeichnet durch folgende Merkmale:

a) Zur Verschiebung der Lagerplatine (64) gegenüber der Bodenplatte (60) sind in der Lagerplatine erste Längsschlitze (84) vorgesehen, in die erste Rollen (90) eingreifen, die an der Bodenplatte montiert sind;

b) zur Verschiebung der unteren Lagerplatte (80) gegenüber der Lagerplatine (64) sind in letzterer zweite Längsschlitze (100) vorgesehen, in die zweite Rollen (106) eingreifen, die an der unteren Lagerplatte (80) montiert sind.

4. Sitzlagerung nach Anspruch 2 oder 3, dadurch gekennzeichnet, daß die Dreheinrichtung zwischen Sitzmontageplatte (130) und unterer Lagerplatte (80) folgende Merkmale aufweist:

a) Zwischen der unteren Lagerplatte (80) und der Sitzmontageplatte (130) ist eine Drehscheibe (132) angeordnet;

b) auf der Sitzmontageplatte (130) ist eine untere Lagerscheibe (142) angeordnet;

c) auf der unteren Lagerscheibe (142) ist ein Lagerkäfig (150) angeordnet, der mehrere Lager (160) aufweist, die sich auf der unteren Lagerscheibe (142) abstützen;

d) eine obere Lagerscheibe (148) liegt auf den Lagern (160) auf;

e) auf der unteren Lagerplatte (80) ist in einer mittigen Bohrung (124) eine Lagerhülse (134) befestigt, die durch mittige Bohrungen (136, 138, 140) in der Drehscheibe (132), der Sitzmontageplatte (130) und der unteren Lagerscheibe (142) ragt.

5. Sitzlagerung nach Anspruch 2, 3 oder 4, dadurch gekennzeichnet, daß auf der Bodenplatte (60) ein sich lotrecht nach oben erstreckender Stehbolzen (116) montiert ist, an dem mehrere an verschiedenen Abschnitten (178, 180, 182) der Sitzmontageplatte (130) angehängte Federn (166, 168, 170) sowie mehrere Stoßdämpfer (190, 194) angreifen, die sich an verschiedenen Abschnitten (182, 198) der Sitzmontageplatte (130) abstützen.

6. Sitzlagerung nach Anspruch 5, dadurch gekennzeichnet, daß auf dem Stehbolzen (116) ein Speichenstern (172) montiert ist, an dem drei im gleichen Abstand um den Stehbolzen angeordnete Federn (166, 168, 170) mit ihrem jeweils einen Ende sowie das eine Ende eines Stoßdämpfers (194) angreifen, während ein zweiter Stoßdämpfer (190), der rechtwinklig zum ersten Stoßdämpfer (194) liegt, mit seinem einen Ende unmittelbar am Stehbolzen (116) angreift.

7. Sitzlagerung nach einem der Ansprüche 2 bis 6, dadurch gekennzeichnet, daß die Bodenplatte (60) auf einer Verschiebeeinrichtung (40, 42) aus jeweils doppelten Gleitschienen (44, 46) montiert ist und über eine Verriegelung (30, 52, 214, 236) in jeweils gewünschter Verschiebestellung gegenüber der ortsfesten Gleitschiene (44) verriegelbar ist.

8. Sitzlagerung nach Anspruch 7, dadurch gekennzeichnet, daß die Verriegelung (30, 52, 214, 236) einen Längsverschiebungs-Verriegelungshebel (30) aufweist, der an der Lagerplatine (64) angelenkt ist und eine Einstellklinke (52) beaufschlagt, die an der Bodenplatte (60) angelenkt ist und einen Arretierungsabschnitt (54) aufweist, der in die ortsfeste Gleitschiene (44) verriegelnd eingreift.

9. Sitzlagerung nach Anspruch 8, gekennzeichnet, durch eine die Einstellklinke (52) in ihre Verriegelungsstellung ziehende Feder (214) und durch eine den Längsverschiebungs-Verriegelungshebel (30) in eine die Verriegelung durch die Einstellklinke (52) zulassende Stellung ziehende Feder (236).

10. Sitzlagerung nach einem der Ansprüche 2 bis 9, gekennzeichnet durch eine an der Sitzmontageplatte (130) angeordnete Sitz-Drehverriegelung (32, 250, 262), die die Sitzmontageplatte hinsichtlich einer Drehung gegenüber der unteren Lagerplatte (80) verriegelt.

11. Sitzlagerung nach Anspruch 10, dadurch gekennzeichnet, daß die Sitz-Drehverriegelung (32, 250, 262) einen Drehverriegelungshebel (32) aufweist, der an der Sitzmontageplatte (130) angelenkt ist, in Verriegelungsstellung mit einem Abschnitt (250) in eine Zahnung (126) im Außenrand der unteren Lagerplatte (80) eingreift und von einer Feder (262) entweder von der unteren Lagerplatte weg, oder gegen sie gezogen wird.

12. Sitzlagerung nach einem der Ansprüche 2 bis 11, gekennzeichnet durch eine Dmäpfungsverriegelung (320, 336) zur wahlweisen Kupplung der unteren Lagerplatte (80) mit der Lagerplatine (64) und der Bodenplatte (60) zur Unterbindung von Relativbewegungen zwischen diesen drei Bauteilen.

13. Sitzlagerung nach Anspruch 12, dadurch gekennzeichnet, daß die Dämpfungsverriegelung (320, 336) einen Kupplungsstift (320) aufweist, der in der unteren Lagerplatte (80) gelagert und über eine Hub- und Absenkvorrichtung (34, 288, 314, 330) lotrecht verschiebbar ist und in seiner abgesenkten Kupplungsstellung in eine Ausnehmung (336) der Bodenplatte (60) eintaucht.

14. Sitzlagerung nach Anspruch 13, dadurch gekennzeichnet, daß die Hub- und Absenkvorrichtung (34, 288, 314, 330) einen an der Unterseitte der Sitzmontageplatte (130) angelenkten Dämpfungsverriegelungshebel (34) aufweist, der bei seiner Verschwenkung eine Dämpfungsverriegelungsplatine (288) verschwenkt, die an der Unterseite der Sitzmontageplatte (130) angelenkt ist und einen Bogenrand (314) aufweist, der in eine am oberen Ende des Kupplungsstiftes (320) montierte Rolle (330) eingreift, wenn sich die Sitzmontageplatte (130) in einem ausgewählten Winkelbereich relativ gegenüber der unteren Lagerplatte (80) befindet.

15. Sitzlagerung nach Anspruch 1, dadurch gekennzeichnet, daß im Zwischenteil (66) eine erste, sich auf dem Bodenteil (62) abstützende Rollengruppe (336, 368, 370, 372) mit parallelen ersten Achsen (374, 376) sowie eine zweite, gegen die Sitzaufnahme (82) anliegende Rollengruppe (402, 404, 406, 408) angeordnet sind, deren parallele zweiten Achsen (410, 412) senkrecht zu den ersten Achsen liegen.

16. Sitzlagerung nach Anspruch 15, gekennzeichnet durch folgende Dämpfungs- und Zentrierelemente:

a) Ein erster Stoßdämpfer (396) ist zwischen Zwischenteil (66) und Bodenteil (62) geschaltet und liegt parallel zu den zweiten Achsen (410, 412);

b) ein erstes Federpaar (386, 388) ist zwischen einem gemeinsamen Widerlager (390) des Bodenteils (62) und sich gegenüberliegenden Abschnitten (392, 394) des Zwischenteils (66) eingehängt und liegt parallel zu den zweiten Achsen (410, 412);

c) ein zweiter Stoßdämpfer (438) ist zwischen Zwischenteil (66) und Sitzaufnahme (82) geschaltet und liegt parallel zu den ersten Achsen (374, 376);

d) ein zweites Federpaar (428, 430) ist zwischen einem gemeinsamen Widerlager (432) der Sitzaufnahme (82) und sich gegenüberliegenden Abschnitten (434, 436) des Zwischenteils (66) eingehängt und liegt parallel zu den ersten Achsen (374, 376).

17. Sitzlagerung nach Anspruch 16, dadurch gekennzeichnet, daß die Sitzaufnahme (82) einen drehbar montierten Sitz aufweist.

**Claims**

1. A vibration attenuator seat basement (10; 350) comprising a seat receptacle (82) which is capable of limited, attenuated movement relative to a base assembly (62) in any direction (20, 22, 24, 26) whithin a horizontal plane and which is resiliently maintained in a center position relative to the base assembly, characterized in that between said base assembly (62) and said seat receptacle (82) an intermediate assembly (66) is provided being limited movable relative to said base assembly (62) in only one direction (94; 378), whereas the seat receptacle (82) is limited movable relative to said intermediate assembly (66) only in a second direction (110; 444), whereby the two displacement axes (88, 104; 444, 446, 448) are perpendicular to each other.

2. A seat basement according to claim 1, characterized by the following features:

a) The base assembly (62) comprises a base plate (60), the intermediate assembly (66) comprises a bearing retainer plate (64) and the seat receptacle (82) comprises a lower bearing plate (80) as well as a seat mounting plate (130);

b) a plurality of bearings (74) is mounted in the bearing retainer plate (64), said bearings (74) being supported by said base plate (60) and contacting the lower bearing plate (80);

c) said bearing retainer plate (64) is movable relative to said base plate (60) along said first displacement axis (88);

d) said lower bearing plate (80) is movable relative to said bearing retainer plate (64) along said second displacement axis (104);

e) the seat mounting plate (130) is disposed above said lower bearing plate (80) and rotatable thereto.

3. A seat basement according to claim 2, characterized by the following features:

a) First elongated slots (84) are in said bearing retainer plate (64) for permitting movement of the bearing retainer plate relative to said base plate (60); first rollers (90) being mounted on said base plate and engaging said first elongated slots (84);

b) second elongated slots (100) are in said bearing retainer plate (64) for permitting movement of the lower bearing plate (80) relative to said bearing retainer plate; second rollers (106) being mounted on said lower bearing plate (80) and engaging said second elongated slots.

4. A seat basement according to claim 2 or 3, wherein the rotating means between seat mounting plate (130) and lower bearing plate (80) is characterized by the following features:

a) A swivel disc (132) is provided between the lower bearing plate (80) and the seat mounting plate (130);

b) a lower bearing disc (142) is provided on the seat mounting plate (130);

c) a bearing cage (150) is provided on the lower bearing disc (142); said bearing cage having a plurality of bearings (160) which are supported by the lower bearing disc (142);

d) an upper bearing disc (148) is supported by said bearings (160);

e) a collar (134) is mounted on the lower bearing plate (80) in a central aperture (124) and extends through central apertures (136, 138, 140) in the swivel disc (132), the seamt mounting plate (130) and the lower bearing disc (142).

5. A seat basement according to claim 2, 3 or 4, further comprising a stud (116) mounted on and extending vertically upwardly from said base plate (60), a plurality of springs (166, 168, 170) coupled to different portions (178, 180, 182) of said seat mounting plate (130) as well as a plurality of shock absorbers (190, 194) engaging different portions (182, 198) of said seat mounting plate (130), whereby both, said springs (166, 168, 170) and said shock absorbers (190, 194) are coupled to said stud (116).

6. A seat basement according to claim 5, further comprising a spider (172) mounted on said stud (116), one end of a shock absorber (194) as well as the first ends of three springs (166, 168, 170) equidistantly spaced about said stud are coupled to said spider (172), while a second shock absorber (190) being perpendicular to said first shock absorber (194) is coupled directly with its first end to the stud (116).

7. A seat basement according to one of the claims 2 to 6, wherein said base plate (60) is mounted on sliding means (40, 42) comprising each double sliding tracks (44, 46) and is lockable via locking means (30, 52, 214, 236) in a selected sliding position relative to the fixed sliding track (44).

8. A seat basement according to claim 7, wherein the locking means (30, 52, 214, 236) includes a lock lever (30) for longitudinal movement, said lock lever being pivotally mounted on said bearing retainer plate (64) and engaging an adjuster latch (52) being pivotally mounted on said base plate (60) and having a locking portion (54) engaging said fixed track (44).

9. A seat basement according to claim 8, wherein a spring (214) biases said adjuster latch (52) into its locking position and wherein a spring (236) biases said lock lever (30) in a position permitting the locking by the adjuster latch (52).

10. A seat basement according to one of the claims 2 to 9, further including a seat swivel locking means (32, 250, 262) mounted on said seat mounting plate (130) for locking the seat mounting plate with regard to a rotation relative to the lower bearing plate (80).

11. A seat basement according to claim 10, wherein said seat swivel lockings means (32, 250, 262) comprises a swivel lock lever (32) pivotally mounted on said seat mounting plate (130), said swivel lock lever (32) having a portion (250) engaging, in locking position, a toothing (126) in the outer periphery of said lower bearing plate (80), and a spring (262) for biasing the swivel lock lever either away from or toward the lower bearing plate.

12. A seat basement according to one of the claims 2 to 11, further including attenuator locking means (320, 336) for selectively coupling the lower bearing plate (80) to said bearing retainer plate (64) and said base plate (60) in order to prevent relative movement between said three parts.

13. A seat basement according to claim 12, wherein said attenuator locking means (329, 336) comprises a coupling pin (320) mounted on said lower bearing plate (80) and slidably movable vertically via raising and lowering means (34, 288, 314, 330) and immerging, in its lowered coupling position, in an aperture (336) of said base plate (60).

14. A seat basement according to claim 13, wherein said raising and lowering means (34, 288, 314, 330) comprises an attenuator lock lever (34) pivotally mounted on the botom side of said mounting plate (130); said attenuator lock lever (34), when being pivoted, pivoting an attenuator lock plate (288) pivotally mounted on the bottom side of said seat mounting plate (130) and having a curved edge (314) engaging a roller (330) mounted on the upper end of said coupling pin (320) when the seat mounting plate (130) is within a selected angular range relative to the lower bearing plate (80).

15. A seat basement according to claim 1, wherein a first plurality of rollers (366, 368, 370, 372) being in contact with the base assembly (62) is rotatably mounted in the intermediate assembly (66) with a first plurality of parallel axes (374, 376), and a second plurality of rollers (402, 404, 406, 408) being in contact with the seat assembly (82) is rotatably mounted in the intermediate assembly (66), with a second plurality of parallel axes (410, 412) perpendicular to the first plurality of axes.

16. A seat basement according to claim 15 including the following attenuating and centering elements:

a) A first shock absorber (396) is coupled between intermediate assembly (66) and base assembly (62) and is positioned parallel to the second axes (410, 412);

b) a first pair of springs (386, 388) is coupled between a common abutment (390) of said base assembly (62) and opposite portions (392, 394) of said intermediate asembly (66) and is positioned parallel to the second axes (410, 412);

c) a second shock absorber (438) is coupled between intermediate assembly (66) and seat receptacle (82) and is positioned parallel to the first axes (374, 376);

d) a second pair of springs (428, 430) is coupled between a common abutment (432) of said seat receptacle (82) and opposite portions (434, 436) of the intermediate assembly (66) and is positioned parallel to the first axes (374, 376).

17. A seat basement according to claim 16, wherein said seat receptacle (82) includes a rotatably mounted seat.

**Revendications**

1. Système de montage pour siège (10; 350) avec amortissement des vibrations, comprenant un socle (82) de réception du siège, qui est déplaçable de façon amortie et limitée par rapport à une embase (62) dans un plan horizontal dans chaque direction (20, 22, 24, 26) et qui est maintenu élastiquement dans une position centrée par rapport à l'embase, caractérisé en ce qu'il est prévu, entre l'embase (62) et le socle (82), un élément intermédiaire (66) qui n'est déplaçable de façon limitée par rapport à l'embase (62) que dans une direction (94; 378), tandis que le socle (82) n'est déplaçable de façon limitée par rapport à l'élément intermédiaire (66) que dans une seconde direction (110; 444), les deux axes de déplacement (88, 104; 444, 446, 448) étant perpendiculaires entre eux.

2. Système de montage pour siège suivant la revendication 1, caractérisé par les particularités suivantes:

a) l'embase (62) comporte une plaque (60), l'élément intermédiaire (66) comporte une platine (64) et le socle (82) comporte une plaque de portée inférieure (80), ainsi qu'une plaque ou semelle (130) de montage du siège;

b) il est prévu dans la platine (64) plusieurs paliers (74) qui reposent sur la plaque d'embase (60) et qui s'appliquent contre la plaque de portée inférieure (80);

c) la platine (64) est déplaçable par rapport à la plaque d'embase (60) selon le premier axe de déplacement (88);

d) la plaque de portée inférieure (80) est déplaçable par rapport à la platine (64) selon le second axe de déplacement (104);

e) la plaque (130) de montage du siège est disposée au-dessus de la plaque de portée inférieure (80) et est montée de façon rotative par rapport à celle-ci.

3. Système de montage pour siège suivant la revendication 2, caractérisé par les particularités suivantes:

a) pour déplacer la platine (64) par rapport à la plaque d'embase (60), il est prévu dans la platine des premières fentes longitudinales (84) dans lesquelles s'engagent des premiers galets (90) qui sont montés sur la plaque d'embase;

b) pour déplacer la plaque de portée inférieure (80) par rapport à la platine (64), il est prévu dans cette dernière des secondes fentes longitudinales (100) dans lesquelles s'engagent des seconds galets (106) qui sont montés sur la plaque de portée inférieure (80).

4. Système de montage pour siège suivant la revendication 2 ou 3, caractérisé en ce que le dispositif de rotation prévu entre la plaque (130) de montage du siège et la plaque de portée inférieure (80) présente les particularités suivantes:

a) un plateau rotatif (132) est disposé entre la plaque de portée inférieure (80) et la plaque (130) de montage du siège;

b) un plateau de portée inférieur (142) est disposé sur la plaque (130) de montage du siège;

c) il est prévu sur le plateau de portée inférieur (142) une cage de palier (150) qui comporte plusieurs paliers (160) prenant appui sur le plateau de portée inférieur (142);

d) un plateau de portée (148) repose sur les paliers (160);

e) il est prévu sur la plaque de portée inférieure (80) une douille de palier (134) fixée dans un perçage central (124) et qui fait saillie à travers des perçages centraux (136, 138, 140) du plateau (132), de la plaque (130) de montage du siège et du plateau de portée inférieur (142).

5. Système de montage pour siège suivant la revendication 2, 3 ou 4, caractérisé en ce que la plaque d'embase (60) porte un axe (116) s'étendant verticalement vers le haut, qui est attaqué par plusieurs ressorts (166, 168, 170) accrochés à diverses parties (178, 180, 182) de la plaque (130) de montage du siège, ainsi que par plusieurs amortisseurs (190, 174) qui prennent appui sur diverses parties (182, 198) de la plaque (130) de montage du siège.

6. Système de montage pour siège suivant la revendication 5, caractérisé en ce qu'une pièce à bras en étoile (172) est montée sur l'axe vertical (116), cette pièce étant attaquée par une extrémité de trois ressorts (166, 168, 170) répartis selon un même écartement autour de l'axe vertical, ainsi que par une extrémité d'un amortisseur (194), tandis qu'un second amortisseur (190), qui est disposé perpendiculairement à l'amortisseur (194), attaque directement l'axe vertical (116) par une de ses extrémités.

7. Système de montage pour siège suivant l'une quelconque des revendications 2 à 6, caractérisé en ce que la plaque d'embase (60) est montée sur un dispositif de déplacement (40, 42) comportant chaque fois des doubles glissières (44, 46) et peut être verrouillée par un dispositif de verrouillage (30, 52, 214, 236) dans la position de déplacement chaque fois désirée par rapport à la glissière fixe (44).

8. Système de montage pour siège suivant la revendication 7, caractérisé en ce que le dispositif de verrouillage (30, 52, 214, 236) comporte un levier de verrouillage de déplacement longitudinal (30) qui est articulé sur la platine (64) et qui attaque un linguet de réglage ou de positionnement (52) articulé sur la plaque d'embase (60) et qui présente une partie d'immobilisation (54) s'engageant en assurant le verrouillage dans la glissière fixe (44).

9. Système de verrouillage pour siège suivant la revendication 8, caractérisé en ce qu'il comprend un ressort (214) amenant par traction le linguet (52) dans sa position de verrouillage, et un ressort (236) amenant par traction le levier de verrouillage de déplacement longitudinal (30) dans une position permettant le verrouillage par le linguet (52).

10. Système de montage pour siège suivant l'une quelconque des revendications 2 à 9, caractérisé en ce qu'il comprend un dispositif de verrouillage angulaire du siège (32, 250, 262) prévu sur la plaque (130) de montage du siège et verrouillant cette plaque de montage d'une manière empêchant un pivotement par rapport à la plaque de portée inférieur (80).

11. Système de montage pour siège suivant la revendication 10, caractérisé en ce que le dispositif de verrouillage angulaire (32, 250, 262) comporte un levier de verrouillage (32) qui est articulé sur la plaque (130) de montage du siège, qui attaque dans la position de verrouillage, par une partie (250), une denture (126) prévue dans le bord extérieur de la plaque de portée inférieure (80), et qui est écarté de la plaque de portée inférieure ou tiré vers cette plaque par un ressort (262).

12. Système de montage pour siège suivant l'une quelconque des revendications 2 à 11, caractérisé en ce qu'il comporte un dispositif de verrouillage d'amortissement (320, 336) permettant d'accoupler à volonté la plaque de portée inférieure (80) avec la platine (64) et la plaque d'embase (60), pour empêcher des déplacements relatifs entre ces trois éléments.

13. Système de montage pour siège suivant la revendication 12, caractérisé en ce que le dispositif de verrouillage d'amortissement (320, 336) comprend un doigt d'accouplement (320) qui est monté dans la plaque de portée inférieure (80) et qui est déplaçable verticalement par un dispositif de relevage et d'abaissement (34, 288, 314, 330), en pénétrant en position d'accouplement abaissée dans un évidement (336) de la plaque d'embase (60).

14. Système de montage pour siège suivant la revendication 13, caractérisé en ce que le dispositif de relevage et d'abaissement (34, 288, 314, 330) comporte un levier de verrouillage d'amortissement (34) articulé sur la face inférieure de la plaque (130) de montage du siège, ce levier faisant basculer, lors de son pivotement, une platine de verrouillage d'amortissement (288) qui est articulée sur la face inférieure de la plaque (130) de montage du siège et qui comporte un bord incurvé en arc de cercle (314) attaquant un galet (330) monté à l'extrémité supérieure du doigt d'accouplement (320) quand la plaque (130) de montage du siège se trouve dans une zone angulaire sélectée par rapport à la plaque de portée inférieure (80).

15. Système de montage pour siège suivant la revendication 1, caractérisé en ce qu'il est prévu, dans l'élément intermédiaire (66), un premier groupe de galets (366, 368, 370, 372) prenant appui sur l'embase (62) et munis de premiers axes parallèles (374, 376), ainsi qu'un second groupe de galets (402, 404, 406, 408) s'appliquant contre le socle (82) du siège et dont les seconds axes parallèles (410, 412) sont perpendiculaires aux premiers axes.

16. Système de montage pour siège suivant la revendication 15, caractérisé par les élément d'amortissement et de centrage ci-après:

a)    un premier amortisseur (396) est monté entre l'élément intermédiaire (66) et l'embase (62) et s'étend parallèlement aux seconds axes (410, 412);

b)    une première paire de ressorts (386, 388) est attelée entre une portée commune (390) de l'embase (62) et des parties opposées l'une à l'autre (392, 394) de l'élément intermédiaire (66) et s'étend parallèlement aux seconds axes (410, 412);

c)    un second amortisseur (438) est monté entre l'élément intermédiaire (66) et le socle (82) du siège et s'étend parallèlement aux premiers axes (374, 376);

d)    une seconde paire de ressorts (428, 430) est attelée entre une portée commune (432) du socle (82) du siège et des parties opposées (434, 436) de l'élément intermédiaire (66) et s'étend parallèlement aux premiers axes (374, 376).

17. Système de montage pour siège suivant la revendication 16, caractérisé en ce que le socle (82) porte un siège monté de façon pivotante.

FIG.1

FIG.11

FIG.2

FIG.3

FIG.9

FIG. 4

FIG. 8

FIG.5

FIG.6

FIG.7

FIG. 10

FIG. 12

FIG.13